# EUROPEAN PATENT APPLICATION

(11) **EP 1 384 884 A1**
(43) Date of publication of application: **28.01.2004**
(21) Application number: 03012463.0
(22) Date of filing: 30.05.2003
(51) Int. Cl.: F03G 7/06

(54) **Electric generator using a shape memory alloy element**

(30) Priority: 26.07.2002 IT TO20020665
(71) Applicant: C.R.F. Società Consortile per Azioni, 10043 Orbassano (Torino) (IT)
(72) Inventor: Pizzi, Marco, 10100 Torino (IT); Perlo, Piero, 12048 Sommariva Bosco (Torino) (IT)
(74) Representative: Gallarotti, Franco

(57) **Abstract**

A generator of electrical energy comprises a lamina (F) made of a shape-memory material, having a first portion (E), constrained in a fixed way to a respective support (PS), and at least one second flexible portion (A), which can move with respect to the first portion (E). Between the first portion (E) and the second portion (A) there is maintained a temperature gradient such as to determine a cyclic transition of the shape-memory material between the respective austenitic and martensitic phases, with a series of mechanical deformations of the lamina (F) between an elongation state and a contraction state. Piezoelectric means (FP) are envisaged for converting the mechanical deformation of the lamina (F) into electrical energy.

## Description

The present invention relates to a generator of electrical energy which uses an active element made of shape-memory material.

Designated by the term shape-memory alloys (SMAs) is the family of metal materials which present the capability of reassuming their initial configuration if they are deformed and subsequently subjected to an appropriate thermal treatment.

Shape-memory alloys undergo a transformation of crystalline phase when they are made to pass from their more rigid configuration at a high temperature (Austenite) to the configuration characterized by lower energy and temperature (Martensite).

The above transformation is the primary cause of the peculiar qualities of SMA materials, as well as the peculiarity of the martensitic phase, which plays a fundamental role in the transformation itself.

When an SMA element is brought to a low temperature, it assumes a configuration of a martensitic type, with low yielding limit, and is easily deformable. Following upon heating, the alloy arranges itself in another crystalline structure, of the austenitic type, and hence reassumes its initial configuration and shape.

The temperature at which the alloy "recalls" its primitive shape can be modified by varying the composition or by appropriate types of heat treatment.

During the aforementioned transformation, there may be involved forces of considerable proportions, which are stored within and released by the material, and this fact is exploited in the majority of applications.

Consequently, although there exist numerous alloys which present the "shape-memory" property, of commercial interest are mainly the ones which recover the deformation to a considerable extent or which generate a considerable force during the phase transition, such as for example the alloys Ni-Ti, Ni-Ti-Cu, Cu-Al-Zn, and Cu-Al-Ni.

Metallurgical processes have enabled application of shape-memory materials in new and simplified embodiments. A determining factor has been the increase in the number of work cycles and hence in the life of SMA actuators.

At the current state of the art, known applications of SMA materials basically regard engineering of traditional mechanical components, such as wires or bars which use classical mechanical machining technologies.

The purpose of the present invention is to provide new and advantageous applications of active elements made of shape-memory alloys, for the purposes of obtaining generators of electrical energy.

A further purpose of the invention is to provide generators of the above type, operation of which is based upon the use of thin films, which may be obtained by deposition of shape-memory materials with processes typically adopted in the microelectronics industry.

The above and yet other purposes, which will emerge more clearly from what follows, are achieved according to the present invention thanks to a generator of electrical energy, which comprises:
- at least one active element made with a shape-memory material, the active element having at least one first portion, constrained in a fixed way to a respective support, and at least one second flexible portion, which can move with respect to the first portion;
- means for inducing a temperature gradient between the first portion and the second portion, the gradient being such as to determine a cyclic transition of the shape-memory material between the respective austenitic and martensitic phases, and hence a series of mechanical deformations of the active element between an elongation state and a contraction state; and
- means for converting the mechanical deformation of the active element into electrical energy.

Preferably the aforesaid active element is in the form of a lamina or of a thin film, in particular having a thickness smaller than 50 micron and preferably comprised between 0.5 and 2 micrometers.

The means for converting the mechanical deformation of the active element into electrical energy preferably comprise at least one piezoelectric element operatively connected to the active element.

Advantageous embodiments of the invention are indicated in the annexed claims, which are meant to form an integral part of the present description.

Further purposes, characteristics and advantages of the present invention will emerge clearly from the ensuing detailed description and from the annexed drawings, which are provided purely by way of explanatory and non-limiting example and in which:
- Figures 1 and 2 illustrate, by means of schematic cross-sectional views, a thin-film micro-actuator made of shape-memory alloy built according to the invention, in two different operating conditions;
- Figures 3 and 4 illustrate, by means of schematic cross-sectional views, two different operating conditions of a first generator of electrical energy which uses a thin-film micro-actuator made of shape-memory alloy according to the invention; and
- Figure 5 and 6 illustrate, by means of schematic cross-sectional views, two different operating conditions of a second generator of electrical energy, which uses a thin-film micro-actuator made of shape-memory alloy according to the invention.

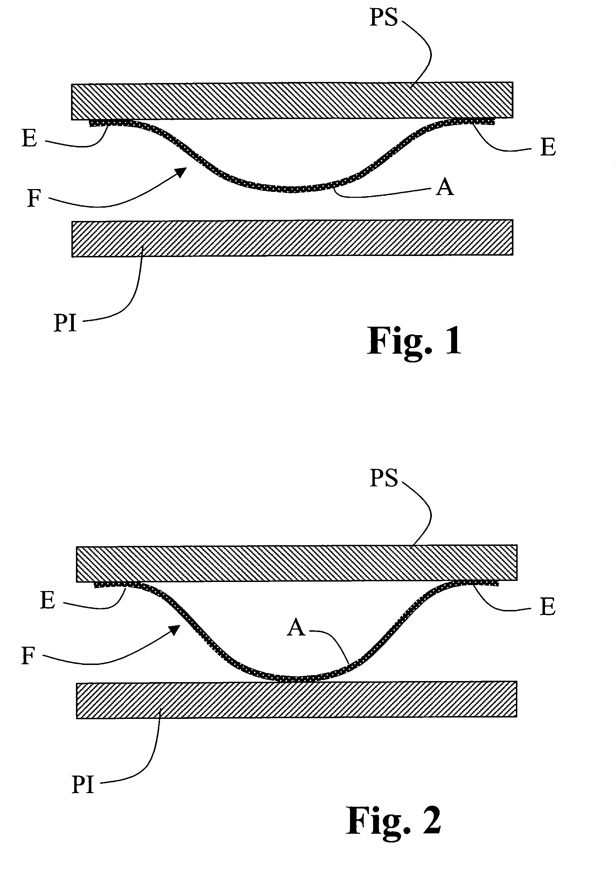

Figure 1 shows one of the possible configurations, in which a thin film made of shape-memory alloy, designated by F and referred to in what follows as lamina, is caused to oscillate between two positions, by using a difference in temperature between two parts of a physical system, formed, in the example, by two surfaces PS and PI, which are at different temperatures.

It is to be noted that by "thin film" is meant herein a laminar element of an extremely small thickness, preferably comprised between 0.5 and 2 micrometers, and in any case less than 50 micron.

The thin film which constitutes the lamina F can be made with techniques similar to the ones typically used in the micro-electronics field, for example, for depositing conductive films, namely, by vapour deposition or sputtering.

In the above perspective, the lamina F can be obtained by means of techniques of flash vapour deposition, based upon the use of a crucible which is maintained at a very high temperature and on which there are introduced powders of the material to be vaporized, i.e., the shape-memory alloy. As soon as they come into contact with the crucible, the aforesaid powders vaporize immediately on a surface so as to form the desired thin film.

Another possibility is that of obtaining the lamina F by means of techniques of laser ablation, which exploit laser radiation for fixing a submicrometric powder on a surface by means of a precision-casting process so as to produce a thin film having the same composition as that of the vaporized material.

In the case illustrated by way of example in Figures 1 and 2, the lamina F is constrained along two opposite sides, for respective stretches E, to the top surface PS, in such a way as to form a flexible loop or bend A which protrudes in the direction of the bottom surface PI. The stretches E of the lamina F may, for example, be bonded directly on the surface PS, or else the structure can be obtained by means of deposition of the lamina upon a layer, referred to as sacrificial layer, which is subsequently removed.

The surface PS is maintained at a temperature T1, lower than the temperature T2 at which the surface PI is kept.

The temperatures T1 and T2 are chosen in such a way that the SMA material of which the lamina F is made will be, at the temperature T1, in its austenitic phase, characterized by a greater elongation of the lamina itself, and, at the temperature T2, in the respective martensitic phase, characterized by a smaller elongation.

The length of the lamina F, understood as the distance between the two opposite stretches E bonded to the surface PS, and the distance between the surfaces PS and PI are chosen in such a way that the loop or bend A, i.e., the flexible part of the lamina F, will come into contact with the surface PI at a higher temperature T2 when the SMA material is in its austenitic phase, as may be seen in Figure 2.

Given the low thermal capacity of the lamina F, which is in the form of a thin film, the thermal equilibrium between the parts E of the lamina F, which are at a temperature T1, and the remaining part A, which is at a temperature T2, is rapidly reached, with the consequent transition to the martensitic phase.

The consequent contraction of the lamina F causes detachment from the bottom surface PI, as is highlighted in Figure 1.

The above process is followed by a new restoration of the thermal equilibrium between the part A of the lamina F and the parts E thereof which are at a temperature T1, which is facilitated by the rapid thermal exchange with the environment obtained thanks to the small thickness of the lamina F. There is thus obtained transition of the SMA material to the austenitic phase, with a consequent subsequent elongation and start of a new cycle.

By appropriate choice of the temperatures T1 and T2, of the distance between the surfaces PS and PI, as well as of the thickness and length of the SMA lamina F, it is therefore possible to obtain continuous oscillation of the lamina itself between the two positions shown in Figures 1 and 2.

The extremely small thickness of the lamina F, which, as has been said, is preferably smaller than 2 µm, enables oscillation frequencies of the order of hundreds of hertz or more to be obtained.

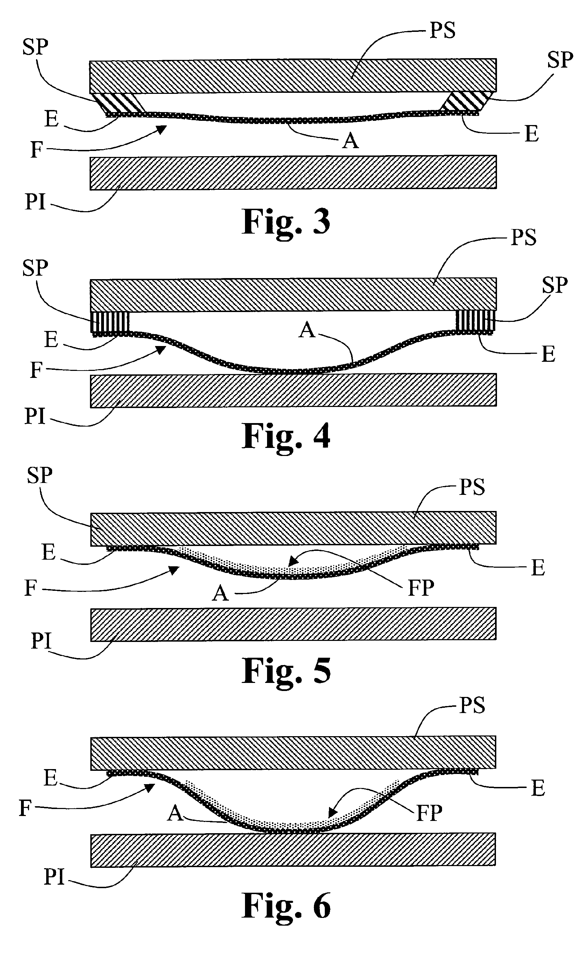

According to an important feature of the present invention, to the micro-actuator illustrated in Figures 1 and 2 there may be associated means suitable for converting the mechanical deformation of the lamina F into electrical energy. An example of application in this sense is illustrated in Figures 3 and 4, where the same reference numbers as the ones of the preceding figures are used.

In the embodiment of Figures 3 and 4, the contraction of the lamina F is exploited for generating electrical energy, in combination with piezoelectric layers SP, i.e., layers made of ferro-electric material of the type characterized by an electrical polarization which is induced in the material when it undergoes mechanical stresses.

The piezoelectric layers SP are deposited in a known way on the top surface PS, and the stretches E of the lamina F are constrained thereon. The length of the lamina is such that, in the martensitic phase of the SMA material, the piezoelectric layers SP are mechanically pre-stressed.

In the above configuration, shear strain of the elements SP is therefore exploited, which in many ferro-electric materials presents a particularly high direct piezoelectric constant, designated by "d₅₁".

As may be readily understood, with the arrangement illustrated, the oscillations of the lamina F due to the temperature difference between the surfaces PS and

PI, as described previously, determine continuous cycles of mechanical stresses of the piezoelectric layers SP, with the consequent generation by the latter of electrical energy, which may then be collected according to procedures in themselves known.

A further possible embodiment, illustrated in Figures 5 and 6, envisages that a piezoelectric film, designated by FP, will be directly deposited on the flexible part A of the lamina F. As compared with the previous embodiment, in the case of Figures 5 and 6 the direct piezoelectric constant designated as "d₃₁" is exploited for the purposes of energy generation.

The piezoelectric film FP may, for instance, be deposited on the lamina F made of a shape-memory alloy by means of the Sol-Gel technique.

The said technique, which is widely used in the microelectronics field, basically envisages the steps of: obtaining chemically a gel in which the solid material to be deposited (in this case the piezoelectric material) is present; depositing the gel on the support (in this case the lamina F); and definitively fixing the solid material by means of heat treatment.

Also in the case of the embodiment illustrated in Figures 5 and 6, the oscillations of the lamina F due to the difference in temperature between the surfaces PS and PI, as described previously, determine continuous cycles of mechanical stresses of the piezoelectric film FP, with consequent generation by the latter of electrical energy, which can then be collected in any known way.

Preferably, for the purposes of the implementation of the invention of Figures 3-4 and 5-6, ferro-electric materials of the "soft" type may be used, which will enable operation outside the resonance frequency.

From what has been said above, the characteristics of the present invention emerge clearly, the invention being based upon exploitation of the deformation of shape-memory materials for providing generators of electrical energy, the said deformations being obtained starting from differences in temperature induced between different portions of the element F.

The temperature gradient necessary for operation of the proposed generators may of course be obtained in any way whatsoever, for example by means of solar or nuclear energy, or energy deriving from combustion, etc.

It is clear that numerous variants are possible, for the person skilled in the branch, to the micro-actuator and to the energy generator described by way of example herein, without thereby departing from the sphere of novelty inherent in the inventive idea.

The generator of electrical energy according to the invention could of course envisage a plurality of laminas F made of shape-memory material, associated to which are respective piezoelectric elements PS or FP.

The SMA material used for obtaining the lamina F may be of any known type, and preferably chosen in the group comprising the alloys Ni-Ti, Ni-Ti-Cu, Cu-Al -Zn, and

Cu-Al-Ni.

With solutions that are clear to the person skilled in the branch, the lamina F made of shape-memory material could be constrained to the surface PS just at one end E, whilst, however, maintaining the respective flexible part A.

Another possibility consists in setting the constraining stretches E one on top of the other so as to form a closed or annular cross-section.

## Claims

1. A generator of electrical energy comprising:
- at least one element made with a shape-memory material (F), said element having at least one first portion (E), constrained in a fixed way to a respective support (PS; SP), and at least one second flexible portion (A), which can move with respect to the first portion (E);
- first means (PI) for inducing a temperature gradient (T2>T1) between the first portion (E) and the second portion (A), the gradient (T2>T1) being such as to determine a cyclic transition of the shape-memory material between the respective austenitic and martensitic phases, and hence a series of mechanical deformations of said element (F) between an elongation state and a contraction state;
- second means (SP; FP) for converting the mechanical deformation of said element (F) into electrical energy.

2. The generator according to Claim 1, **characterized in that** said element is in the form of a lamina (F).

3. The generator according to Claim 1, **characterized in that** said element is in the form of a thin film (F), in particular of a thickness smaller than 50 µm and preferably comprised between 0.5 and 2 µm.

4. The generator according to Claim 1, **characterized in that** said second means comprise at least one piezoelectric element (SP; FP) operatively connected to said element made of shape-memory material (F).

5. The generator according to Claim 1, **characterized in that** said first means comprise at least one surface (PI) set at a distance from said support (PS; SP), with which said second portion (A) is able to come into contact when said element (F) is in a respective elongation condition, said surface (PI) being at a first temperature (T2), different from a second temperature (T1) of said support.

6. The generator according to Claim 5, **characterized in that** said first temperature (T1) is lower than said second temperature (T2), said material being at the first temperature (T1) in its austenitic phase and at the second temperature (T2) in its martensitic phase.

7. The generator according to Claim 1, **characterized in that** said element (F) comprises at least two first portions (E), each constrained to a support (PI), said second flexible part (A) extending between said two first portions (E).

8. The generator according to Claims 6 and 7, **characterized in that** the distance between said two first portions (E) and the distance between said support (PS) and said surface (PI) are such that said second flexible part (A) will come into contact with said surface (PI) when said material is in its austenitic phase.

9. The generator according to Claim 4 or Claim 7, **characterized in that** said first portion (E) or said two first portions (E) are constrained to a respective piezoelectric element (SP), the latter constituting said support and being fixed to a respective supporting surface (PS).

10. The generator according to Claim 9, **characterized in that** said piezoelectric element (SP) is in the form of a layer deposited on said supporting surface (PS).

11. The generator according to Claim 9, **characterized in that** said piezoelectric element (SP) is mechanically stressed in the martensitic phase of said material.

12. The generator according to Claim 4, **characterized in that** said piezoelectric element (FP) is in the form of film deposited on said second flexible portion (A).

13. The generator according to Claim 4 and/or Claim 9 and/or Claim 12, **characterized in that** said piezoelectric element (PS; FP) is made of ferro-electric material of the "soft" type.

14. A micro-actuator comprising:
- at least one element made with a shape-memory material (F), said element having at least one first portion (E), constrained in a fixed way to a respective support (PS; SP), and at least one second flexible portion (A), which can move with respect to the first portion (E);
- first means (PI) for inducing a temperature gradient (T2>T1) between the first portion (E) and the second portion (A), the gradient (T2>T1) being such as to determine a cyclic transition of the shape-memory material between the respective austenitic and martensitic phases, and hence a series of mechanical deformations of said element (F) between an elongation state and a contraction state.
The foregoing substantially as described and illustrated herein, and for the purposes specified.
